# EUROPEAN PATENT SPECIFICATION

(11) **EP 0 426 624 B1**
(45) Date of publication and mention of the grant of the patent: **16.03.1994**
(21) Application number: 90830472.8
(22) Date of filing: 23.10.1990
(51) Int. Cl.: B60J 1/18, E05C 17/32

(54) **A device for operating the rear window of an agricultural tractor**
Vorrichtung zum Bedienen eines Heckfensters eines landwirtschaftlichen Schleppers
Dispositif d'actionnement d'une fenêtre arrière de tracteur agricole

(30) Priority: 30.10.1989 IT 6792989
(43) Date of publication of application: 08.05.1991
(73) Proprietor: SAME S.p.A., I-24047 Treviglio (Bergamo) (IT)
(72) Inventor: Salvini, Tiziano, I-20097 San Donato Milanese (Milano) (IT)
(74) Representative: Bosotti, Luciano

(56) References cited:
- DE-A- 2 800 985
- DE-C- 192 269
- FR-A- 2 225 606
- US-A- 4 469 370

## Description

The present invention relates to a device for operating a rear window of an agricultural tractor which is hinged at its top to the structure of the tractor so that it can pivot between a lowered, completely closed position and a raised, completely open position.

More specifically, the invention relates to a device according to the pre-characterising portion of claim 1, which is known from US-A-4,469,370.

US-A-4,469,370 shows a hinged closure panel of a vehicle which is detachably connected and locked to its frame by means of an articulated latch pivoted at one end to a detachable connector.

DE-C-192,269 shows a device comprising two arms articulated to each other and a tension spring interposed between the arms which applies a force tending to maintain the arms substantially parallel or aligned to each other. One end of the device is articulated to a movable panel and the other end is articulated to the fixed frame.

One object of the invention is to provide an operating device which is particularly compact in order to avoid any restriction of the view with the window open and with the window closed and which is therefore particularly suitable for application to tractors with reversible driving positions.

Another object of the invention is to provide a simple and functional operating device which is also designed to position the window and hold it securely in an intermediate, partially open position.

A further object of the invention is to provide an operating device which can be operated in a practical and easy manner by the operator without the need for him to change his driving position and which is also arranged so as to assist the movement of the window from the closed position to the open position, and vice vicersa, with a minimum of manual effort whilst at the same time ensuring that it is held firmly in the selected position.

According to the invention, these and other objects are achieved by a device according to claim 1.

The invention will now be described in detail with reference to the appended drawings, provided purely by way of non-limiting example, in which:
Figure 1 is a schematic perspective view of an agricultural tractor with a rear window provided with an operating device according to the invention,
Figure 2 is a vertical section taken on the line II-II of Figure 1, on an enlarged scale, with the window in the closed condition,
Figure 3 is a perspective view of an operating device in the configuration of Figure 2,
Figure 4 is a view similar to Figure 2 with the window in the partially open condition,
Figure 5 is a perspective view of the operating device in the configuration of Figure 4,
Figure 6 is a plan view from above taken on the arrow VI of Figure 5,
Figure 7 is a section taken on the line VII-VII of Figure 5, on an enlarged scale, and
Figure 8 is view similar to Figures 2 and 4 with the window in the completely open condition.

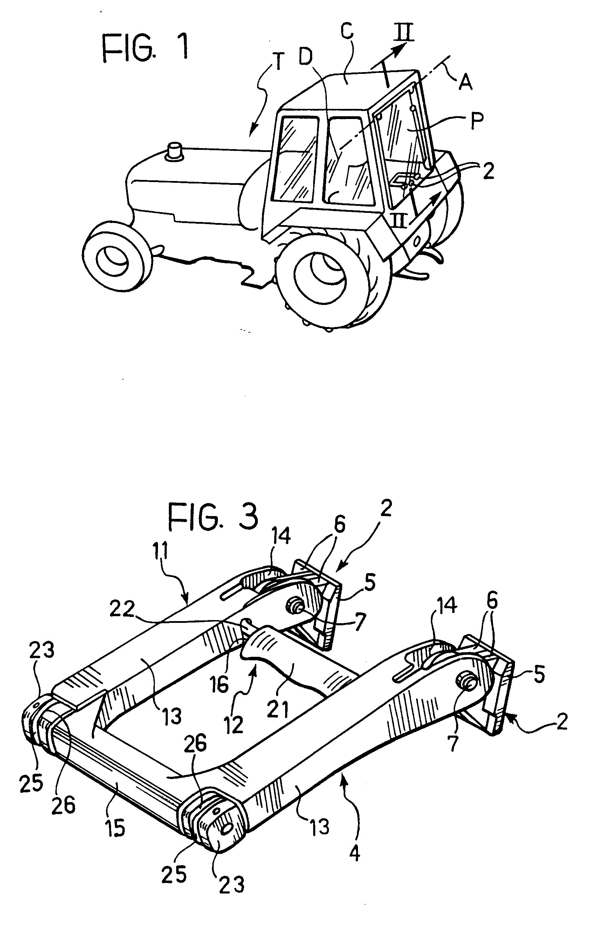

With reference to Figure 1, an agricultural tractor, generally indicated T, has a driver's cab C enclosing a driving position D, for example, of the type which can be reversed to enable the tractor T to be driven forwards or backwards.

A window, indicated P, is fitted to the rear end of the cab C and is hinged at its top to the structure of the cab C for pivoting about a horizontal transverse axis A. When the driving position D is in the forward-travel configuration, the window P is obviously situated behind the driver, whilst the window P defines the driver's windscreen in the configuration for driving backwards.

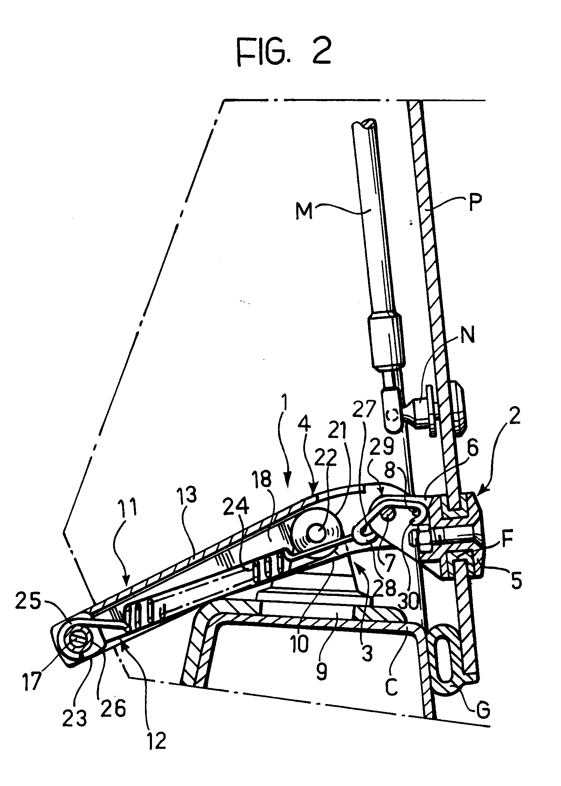

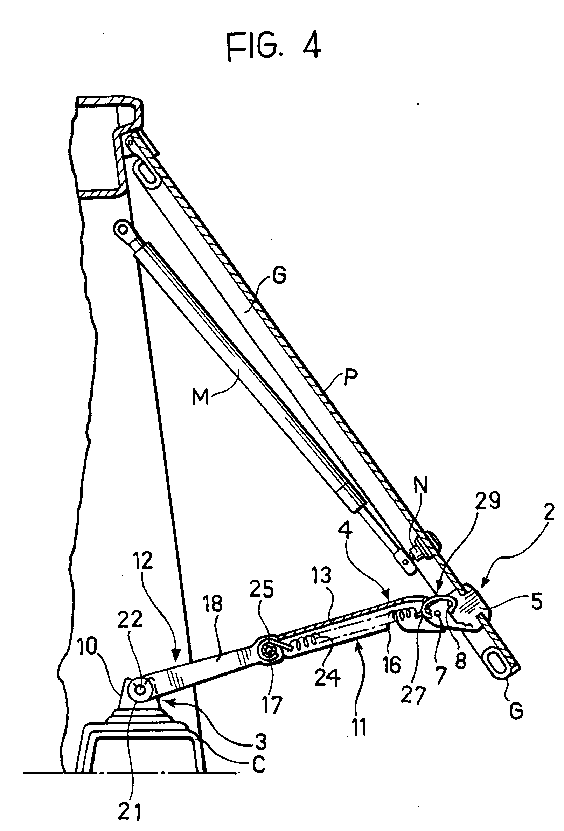

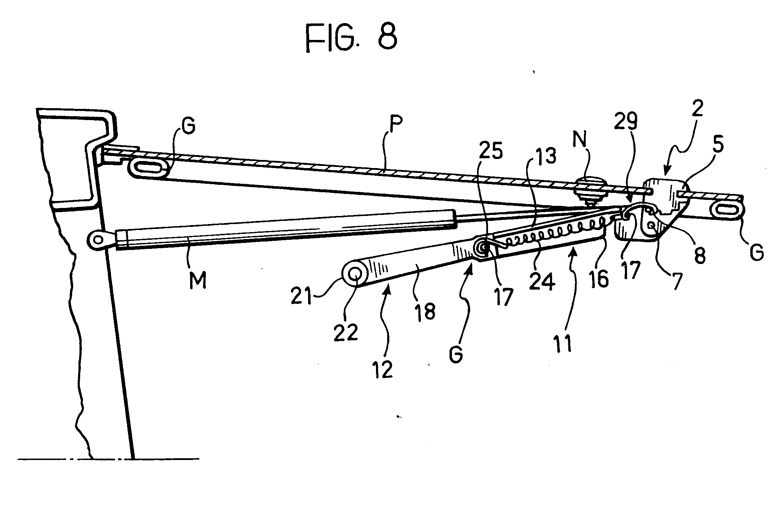

The window P can be moved angularly about the axis A between a lowered, completely closed position shown in Figures 1 and 2, and a raised, completely open position shown in Figure 8. It can also be positioned and held in a partially open configuration, shown in Figure 4, in order to ventilate the driving position D and at the same time provide protection against bad weather.

Two lateral gas springs M (Figures 2, 4, 8) articulated at their upper ends to the structure of the cab C and at their lower ends to respective attachments N fitted to the window P, and an operating device according to the invention, generally indicated 1, are provided for moving the window P between the aforementioned positions.

With reference in greater detail in Figures 2, 4 and 8, the operating device 1 comprises a pair of attachment members 2 fitted in a central position near the bottom of the window P a pair of catch elements 3 fixed to the structure of the cab C in a region near the position assumed by the attachment members 2 when the window P is in the lowered, completely closed configuration, and a resilient toggle handle 4.

Each attachment member 2 includes a base 5 which is fitted in a corresponding hole F in the window P and has two parallel, spaced-apart appendages 6 projecting therefrom and carrying a transverse articulation pin 7 parallel to the pivot axis A of the window P. The two appendages 6 also support a transverse anchoring element 8 which is parallel to the pin 7 and is interposed between the latter and the base 5.

Each catch element 3 includes a base 9 fixed to the structure of the cab C and having a forked projection 10 which extends upwardly therefrom. The forked projections 10 of the two catch elements 3 are aligned on an axis parallel to the pivot axis A of the window P.

With reference now in greater detail to Figures 3, 5 and 6, the handle 4 is constituted by a first, larger, U-shaped part 11 and a second, smaller part 12 which is also U-shaped.

The first part 11 has two longitudinal arms 13 whose free ends 14 are forked and are mounted for pivoting on respective articulation pins 7 of the two attachment members 2 and whose opposite ends are connected by a transverse yoke 15 forming a first grip. Two longitudinal arms 13 have channel-shaped cross-sections with downwardly-facing cavities and also have two internal lateral notches 16 adjacent the respective forks 14, whose function will be made clear below.

The yoke or first grip 15 is tubular and a shaft 17 passes therethrough with its ends projecting in correspondence with two L-shaped end recesses 18 defined in the region of the connection between the yoke 15 and the respective longitudinal arms 13.

The second part 12 is constituted by two longitudinal arms 19 which are shorter than the longitudinal arms 13 of the first part 11 and whose free ends are interconnected by a transverse shaft 20 to which a second grip 21 is fitted. The grip 21 is shorter than the transverse shaft 20 and the latter therefore has two free portions 22 between the ends of the grip 21 and the corresponding ends of the longitudinal arms 19.

These free portions 22 have cross-sections complementary with those of the internal lateral notches 16 in the two longitudinal arms 13 of the first part 11 and with those of the forks 10 of the two catch elements 3.

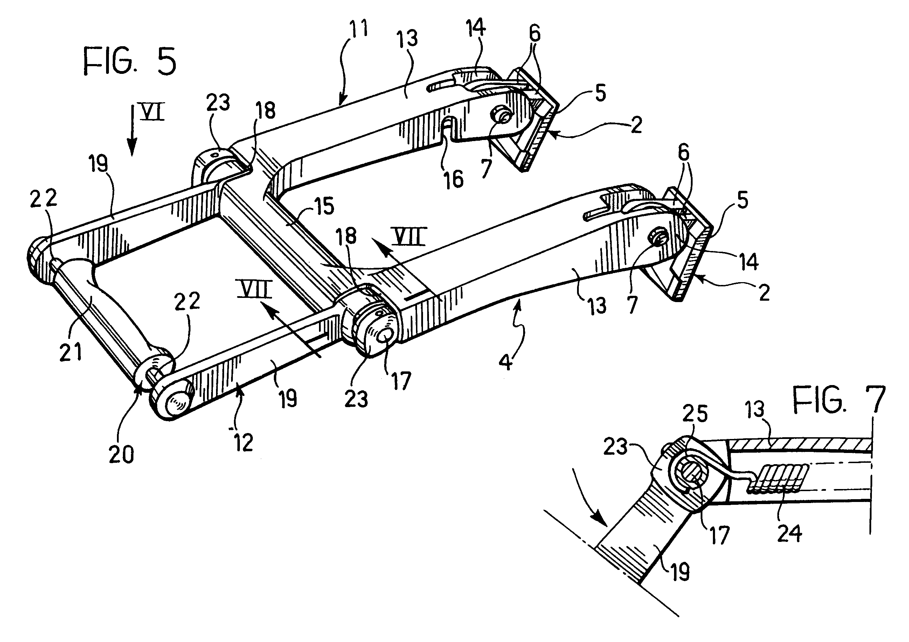

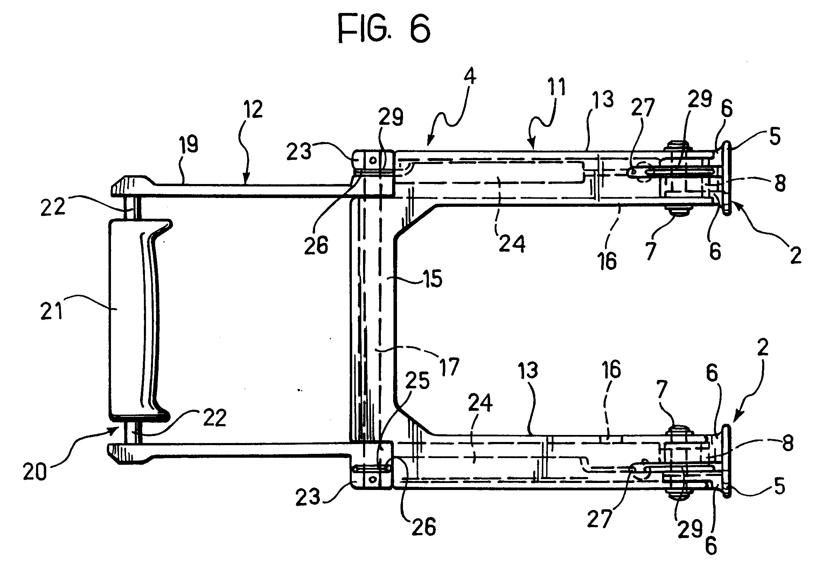

The ends of the longitudinal arms 19 opposite the grip 21 form two enlargements 23 which are generally quadrangular in shape with rounded corners. These enlarged ends 23 are mounted on the ends of the shaft 17 and fit in the corresponding recesses 18 in the first part 11. As can be seen better in Figure 7, the configuration of the coupling between the enlarged ends 23 and the recesses 18 is such that the enlarged ends 23 can be forced to rotate by interference in order to enable the second part 12 to move from the extended position shown in Figures 5 and 6, in which it forms an extension of the part 11, to the folded position shown in Figure 3 and vice versa. In the folded position, the arms 19 of the part 12 fit into the cavities of the arms 13 of the part 11 and the free portions 22 of the shaft 20 are engaged with interference in the respective lateral notches 16. In practice, the part 16 pivots relative to the part 11, snapping between the two positions described above as a result of the interference between the rounded corners of the enlarged ends 23 and the end walls of the corresponding recesses 18. The interference positions can be passed, giving rise to the snap movements, because of the internal shape of the yoke 15 and because of the resilient members of a resilient toggle system incorporated in the handle 4. The resilient toggle system comprises essentially a pair of helical tension springs 24 housed in the cavities of the longitudinal arms 13 of the part 11, outwardly of the regions occupied by the longitudinal arms 19 of the part 12 when it is in the folded configuration.

The two springs 24 are interposed between the two attachment members 2 and the articulation between the part 12 and the part 11 of the handle 4. In detail, each spring 24 has an engagement end 25 which is anchored in a peripheral groove 26 formed, in the central region of the enlarged end 23 of the respective longitudinal arm 19 of the part 12. The opposite end 27 of each spring 24 is anchored to a bent end 28 of a double hook 29 whose opposite bent end 30 is anchored in turn to the transverse anchoring element 8 of the corresponding attachment member 2.

The two double hooks 29 extend above the respective articulation pins 7 of the part 11 of the handle 4 and can therefore pivot, together with the ends 27 of the respective tension springs 24, relative to the pins 7.

The operating device 1 functions as follows.

In the closed configuration of the window P shown in Figures 1 to 3, the handle 4 is arranged in the configuration in which the part 12 is folded against the part 11. The regions of the free portions 22 of the shaft 20 between the lateral notches 16 and the grip 21 are engaged rotatably and releasably in the forks 10 of the two catch elements 3 and the whole handle 4 has a slight downward inclination. In this condition, the centres of the double hooks 29 bear on respective pins 7 and their hooked ends 28 and 30 (that is, the ends 27 of the springs 24 and the respective transverse anchoring elements 8) are aligned in a plane below the pins 7. The tension springs 24 thus apply a downward force on the shaft 17, that is, on the grip 15, and this tends to oppose the upward pivoting of the handle 4. In this configuration, the gas springs M are kept in their shortest, contracted configuration and the window P is kept in sealing contact with the cab structure C by means of conventional peripheral weatherstrisp G.

In order to change from the completely closed configuration to the partially open configuration of the window P shown in Figure 4, it suffices to bring the handle 4 from the folded configuration of Figures 2 and 3 to the extended configuration of Figures 5 and 6. In order to do this, it is nececessary to take hold of the grip 15 and pivot it upwardly, causing the shaft 20 to pivot and the grip 15 with the shaft 17 correspondingly to pivot relative to the enlarged ends 23 of the part 12. The bottom of the window P is thus pushed upwards and the window P pivots about its axis A until the part 12 has pivoted right out to form an extension of the part 11 of the handle 4. The free portions 22 of the shaft 20 remain engaged in the respective forks 10 of the catch elements 9 whilst, as a result of the pivoting described above, the toggle system constituted by the two springs 24 is switched from the condition in which the handle 4 is urged downwards to a condition in which it is urged upwards. This is due to the fact that, as a result of the raising of the attachment members 2 by the partial opening of the window P, the plane joining the ends 27 of the springs 24 and the respective transverse anchoring elements 8 passes over the axis of the pins 7 so as to be above them, as shown in Figure 4. In this configuration, therefore, the springs 24 tend to apply a slight upward force to the handle 4 and this facilitates any subsequent movement of the window P to the completely open condition shown in Figure 8.

In order to reach this completely open configuration, it suffices to grip and lift the handle 21 so as to release the free portions 22 of the shaft 20 from the forks 10 of the catch members 3. The handle 4 can be accompanied as the window P pivots open, which is effected by the full extension of the gas springs M, and can then be released. As a result of this operation, the lines along which the two springs 24 act are moved further from the axis of the articulation pins 7, increasing the upward force applied to the handle 4. This is therefore kept firmly adjacent the inside surface of the window P.

The window P is returned to the partially open and completely closed positions by carrying out the operations described above in reverse.

## Claims

1. A device for operating the rear window (P) of an agricultural tractor (T) which is articulated at its top to the structure (C) of the tractor so that it can pivot between a lowered, completely closed position and a raised, completely open position, comprising:
- a handle (4) including a first part (11) and a second part (12) articulated to each other,
- an attachment part (2) fixed to the lower region of the window (P),
- a catch element (3) fixed to the structure (C) of the tractor near the lower region of the window (P)
wherein:
- one end (14) of said first part (11) is articulated to said attachment part (2) about an axis (7) parallel to the pivot axis (A) of the window (P),
- the second part (12) is movable between an extended condition in which it forms an extension of the first part (11) and a condition in which it is folded beneath the first part (11),
- the second part (12) is engageable with said catch element (3) in order to keep the window (P) in the completely closed position or in a partially open position which correspond respectively to the folded and extended conditions of the second part, and wherein
- the second part (12) is releasable from the catch element (3) in order to position the window (P) in the completely open position,
characterised in that:
- the other end of said first part (11) forms a first grip (15),
- said second part (12) is articulated to the first grip (15) and forms a second grip (21) which is rotatably engageable with said catch element (3), and in that
- a resilient toggle system (24, 29) is provided, which tends to apply a downward force to the handle (4) when the window (P) is in the closed condition and an upward force when the window (P) is in the open condition.

2. A device according to Claim 1, characterised in that the resilient toggle system includes tension-spring means (24) which interconnect the second part (12) of the handle (4), in correspondence with the first grip (15), and hook means (29) anchored to the attachment part (2) and pivotable about the axis of articulation (7) of the first part (11) of the handle (4) to the attachment part (2).

3. A device according to to Claim 2, characterised in that the first part (11) of the handle (4) has a U-shaped configuration whose yoke defines the first grip (15) and whose arms (13) are articulated to a pair of respective supports (2) constituting the attachment part, and the second part (12) of the handle (4) also has a U-shaped configuration whose arms (19) are articulated to the ends of a first shaft (17) which passes through the first grip (15) and whose yoke is formed by a second shaft (20) which passes through the second grip (21) and the ends (22) of which can cooperate with a pair of respective fork members (10) constituting the catch part (3), the spring means comprising two helical tension springs (24) arranged along the arms (13) of the first part (11) of the handle (4) and anchored to the ends (23) of the arms (19) of the second part (12).

4. A device according to Claim 3, characterised in that each of the supports (2) defining the attachment part has a base (5) for fixing to the window (P) and a pair of spaced appendages (6) projecting from the base (5) and carrying the articulation pin (7) of the respective arm (13) of the first part (11) of the handle (4), the appendages (6) being interconnected by a respective transverse anchoring element (8) which is parallel to the articulation pin (7) and is interposed between the latter and the base (5) and to which is rotatably anchored one end (30) of a double hook (29) extending above the articulation pin (7) and having the corresponding tension spring (24) anchored at its opposite end.

5. A device according to Claim 3, characterised in that the ends (23) of the arms (19) of the second part (12) of the handle (4) and the yoke (15) of the first part (11) are shaped so as resiliently to snap-retain the second part (12) relative to the first part (11) in the extended and folded conditions of the second part (12).

## Patentansprüche

1. Vorrichtung zum Bedienen des Rückfensters (P) eines landwirtschaftlichen Schleppers (T), das an seiner Oberseite an der Konstruktion (C) des Schleppers angelenkt ist, sodaß es zwischen einer unteren, vollständig geschlossenen Position und einer erhöhten, vollständig geöffneten Position hin und hergeschwenkt werden kann, umfassend:
einen Handgriff (4), der einen ersten Teil (11) und einen zweiten Teil (12) umfaßt, die aneinander angelenkt sind,
einen Befestigungsteil (2), der im unteren Bereich des Fensters (P) angebracht ist,
ein Sperrelement (3), das an der Konstruktion (C) des Schleppers in Nähe des unteren Bereichs des Fensters (P) angebracht ist, wobei:
ein Ende (14) des ersten Teils (11) am Befestigungsteil (2) über eine zur Drehachse (A) des Fensters (P) parallele Achse (7) angelenkt ist,
der zweite Teil (12) zwischen einem ausgeklappten Zustand, in dem er eine Verlängerung des ersten Teils (11) bildet, und einem Zustand, in dem er unter dem ersten Teil (11) eingeklappt ist, bewegbar ist,
der zweite Teil (12) in das Sperrelement (3) eingerastet werden kann, um das Fenster (P) in einer vollständig geschlossenen oder teilweise geöffneten Position zu halten, die dem eingeklappten beziehungsweise ausgeklappten Zustand des zweiten Teils entspricht, und wobei
der zweite Teil (12) aus dem Sperrelement (3) ausgeklinkt werden kann, um das Fenster (P) in eine vollständig offene Position zu bringen, **dadurch gekennzeichnet,** **daß:**
das andere Ende des ersten Teils (11) einen ersten Griff (15) bildet,
der zweite Teil (12) am ersten Griff (15) angelenkt ist und einen zweiten Griff (21) bildet, der drehbar in das Sperrelement (3) eingerastet werden kann, und dadurch, daß
ein gefedertes Kniehebelsystem (24, 29) vorgesehen ist, das danach strebt, an den Handgriff (4) eine abwärts gerichtete Kraft anzulegen, wenn sich das Fenster (P) in geschlossenem Zustand befindet und eine aufwärts gerichtete Kraft, wenn sich das Fenster (P) in geöffnetem Zustand befindet.

2. Vorrichtung nach Anspruch 1, **dadurch gekennzeichnet, daß** das gefederte Kniehebelsystem eine Zugfedereinrichtung (24) einschließt, die, in Übereinstimmung mit dem ersten Griff (15), den zweiten Teil (12) des Handgriffs (4) verbindet, und eine Hakeneinrichtung (29), die am Befestigungsteil (2) verankert und um die Gelenkachse (7) des ersten Teils (11) des Handgriffs (4) zum Befestigungsteil (2) schwenkbar ist.

3. Vorrichtung nach Anspruch 2, **dadurch gekennzeichnet, daß** der erste Teil (11) des Handgriffs (4) eine U-förmige Gestalt aufweist, deren Bügel den ersten Griff (15) definiert, und dessen Arme (13) an einem Paar entsprechender Halterungen (2) angelenkt sind, die den Befestigungsteil bilden, und der zweite Teil (12) des Handgriffs (4) ebenfalls eine U-förmige Gestalt aufweist, deren Arme (19) an den Enden eines ersten Schafts (17) angelenkt sind, der durch den ersten Griff (15) verläuft und dessen Bügel durch einen zweiten Schaft (20) gebildet wird, der durch den zweiten Griff (21) verläuft und dessen Enden (22) mit einem Paar entsprechender Gabelglieder (10) zusammenwirken, die den Sperrteil (3) bilden, wobei die Federeinrichtung zwei schraubenförmige Zugfedern (24) umfaßt, die entlang der Arme (13) des ersten Teils (11) des Handgriffs (4) angeordnet und an den Enden (23) der Arme (19) des zweiten Teils (12) verankert sind.

4. Vorrichtung nach Anspruch 3, **dadurch gekennzeichnet, daß** jede der Halterungen (2), die den Befestigungsteil definieren, eine Basis (5) zur Befestigung am Fenster (P) und ein Paar beabstandete Fortsätze (6) besitzt, die von der Basis (5) abstehen und den Gelenkstift (7) des jeweiligen Arms (13) des ersten Teils (11) des Handgriffs (4) tragen, wobei die Fortsätze (6) jeweils durch ein Querankerelement (8) verbunden sind, das parallel zum Gelenkstift (7) verläuft, zwischen letzterem und der Basis (5) gelegen ist, und an dem ein Ende (30) eines Doppelhakens (29) drehbar verankert ist, der sich oberhalb des Gelenkstifts (7) erstreckt und eine entsprechende, an seinem gegenüberliegenden Ende verankerte Zugfeder (24) besitzt.

5. Vorrichtung nach Anspruch 3, **dadurch gekennzeichnet, daß** die Enden (23) der Arme (19) des zweiten Teils (12) des Handgriffs (4) und der Bügel (15) des ersten Teils (11) so geformt sind, daß sie, in ausgeklapptem und eingeklapptem Zustand des zweiten Teils (12), den zweiten Teil (12) bezüglich des ersten Teils (11) elastisch einrastend halten.

## Revendications

1. Appareil de manoeuvre de la fenêtre arrière (P) d'un tracteur agricole (T) qui est articulée à sa partie supérieure sur la structure (C) du tracteur afin qu'elle puisse pivoter entre une position basse totalement fermée et une position haute totalement ouverte, comprenant :
- une poignée (4) ayant une première partie (11) et une seconde partie (12) articulées l'une à l'autre,
- une partie (2) de fixation qui est fixée à la région inférieure de la fenêtre (P), et
- un élément d'accrochage (3) fixé à la structure (C) du tracteur à proximité de la région inférieure de la fenêtre (P), et
dans lequel :
- une première extrémité (14) de la première partie (11) est articulée sur la partie de fixation (2) autour d'un axe (7) qui est parallèle à l'axe de pivotement (A) de la fenêtre (P),
- la seconde partie (12) est mobile entre une position dépliée dans laquelle elle forme un prolongement de la première partie (11) et un état dans lequel elle est pliée sous la première partie (11),
- la seconde partie (12) peut coopérer avec l'élément (3) d'accrochage afin que la fenêtre (P) soit maintenue en position totalement fermée ou en position d'ouverture partielle qui correspondent respectivement à l'état plié et déplié de la seconde partie, et dans lequel
- la seconde partie (12) peut être séparée de l'élément d'accrochage (3) pour le positionnement de la fenêtre (P) en position d'ouverture totale,
caractérisé en ce que :
- l'autre extrémité de la première partie (11) forme un premier organe de saisie (15),
- la seconde partie (12) est articulée au premier organe de saisie (15) et forme un second organe de saisie (21) qui peut coopérer en rotation avec l'élément d'accrochage (3), et en ce que
- un ensemble élastique à genouillère (24, 29) est incorporé et a tendance à appliquer une force descendante à la poignée (4) lorsque la fenêtre (P) est à l'état de fermeture et une force ascendante lorsque la fenêtre (P) est à l'état d'ouverture.

2. Appareil selon la revendication 1, caractérisé en ce que l'ensemble élastique à genouillère comprend un dispositif (24) à ressort de traction qui raccorde la seconde partie (12) de la poignée (4) afin qu'elle corresponde au premier organe de saisie (15), et un dispositif d'accrochage (29) fixé à la partie (2) de fixation et qui peut pivoter autour de l'axe d'articulation (7) de la première partie (11) de la poignée (4) vers la partie de fixation (2).

3. Appareil selon la revendication 2, caractérisé en ce que la première partie (11) de la poignée (4) a une configuration en U dont l'étrier délimite le premier organe de saisie (15) et dont les bras (13) sont articulés sur une paire de supports respectifs (2) constituant la partie de fixation, et la seconde partie (12) de la poignée (4) a aussi une configuration en U dont les bras (19) sont articulés sur les extrémités du premier arbre (17) qui passe dans le premier organe de saisie (15) et dont l'étrier est formé par un second arbre (20) qui passe dans le second organe de saisie (21) et dont les extrémités (22) peuvent coopérer avec deux organes fourchus respectifs (10) constituant la partie d'accrochage (3), le dispositif à ressort comprenant deux ressorts hélicoïdaux de traction (24) placés le long des bras (13) de la première partie (11) de la poignée (4) et fixés aux extrémités (23) des bras (19) de la seconde partie (12).

4. Appareil selon la revendication 3, caractérisé en ce que chacun des supports (2) délimitant la partie de fixation possède une base (5) de fixation à la fenêtre (P) et une paire d'organes distants (6) dépassant de la base (5) et portant la broche d'articulation (7) du bras respectif (13) de la première partie (11) de la poignée (4), lesdits organes (6) étant raccordés par un élément transversal respectif (8) d'ancrage qui est parallèle à la broche d'articulation (7) et qui est placé entre cette dernière et la base (5) et auquel est fixée une première extrémité (30) du crochet double (29) dépassant au-dessus de la broche d'articulation (7) en permettant sa rotation et ayant un ressort correspondant de traction (24) qui lui est fixé à son extrémité opposée.

5. Appareil selon la revendication 3, caractérisé en ce que les extrémités (23) des bras (19) de la seconde partie (12) de la poignée (4) et l'étrier (15) de la première partie (11) ont une configuration permettant la retenue par enclenchement élastique de la seconde partie (12) par rapport à la première partie (11) dans les positions dépliée et pliée de la seconde partie (12).
